# EUROPÄISCHE PATENTSCHRIFT

(11) **EP 2 707 621 B1**
(45) Veröffentlichungstag und Bekanntmachung des Hinweises auf die Patenterteilung: **27.07.2016**
(21) Anmeldenummer: 12710901.5
(22) Anmeldetag: 14.03.2012
(51) Int. Cl.: F16D 65/12

(54) **BREMSSCHEIBE UND VERFAHREN ZUM HERSTELLEN EINER BREMSSCHEIBE**
BRAKE DISC AND METHOD FOR PRODUCING A BRAKE DISC
DISQUE DE FREIN ET PROCÉDÉ DE FABRICATION D'UN DISQUE DE FREIN

(30) Priorität: 13.05.2011 DE 102011075821
(43) Veröffentlichungstag der Anmeldung: 19.03.2014
(73) Patentinhaber: Robert Bosch GmbH, 70442 Stuttgart (DE)
(72) Erfinder: SCHLUCK, Peter, 72649 Wolfschlugen (DE); HONER, Michael, 70839 Gerlingen (DE); KIEDROWSKI, Thomas, 52511 Geilenkirchen (DE)
(86) Internationale Anmeldenummer: PCT/EP2012/054434
(87) Internationale Veröffentlichungsnummer: WO 2012/156114

(56) Entgegenhaltungen:
- WO-A1-2010/130529
- DE-A1-102009 003 161
- US-A- 5 629 101
- US-A1- 2008 196 985

## Beschreibung

### Stand der Technik

Die Erfindung geht aus von einer Bremsscheibe nach der Gattung des unabhängigen Patentanspruchs 1 sowie von einem zugehörigen Verfahren zum Herstellen einer Bremsscheibe nach Gattung des unabhängigen Patentanspruchs 6.

Aus dem Stand der Technik sind Bremsscheiben, welche einem hohen Verschleiß unterliegen, sowie zugehörige Herstellungsverfahren bekannt. Hierbei wird auf einen Grundkörper eine Verschleißschicht aufgebracht, welcher deutlich verschleißbeständiger als der Grundkörper ist. Damit die aufgebrachte Verschleißschicht auf dem Grundkörper haftet, wird in einem Vorprozess die Kontaktfläche des Grundkörpers vorbehandelt. Diese Vorbehandlung umfasst beispielsweise eine Reinigung der Kontaktfläche, eine Aufbringung einer Haftmittlerschicht usw.

In der Offenlegungsschrift DE 10 2007 020 891 A1 werden beispielsweise eine Bremsscheibe und ein Verfahren zum Herstellen einer Bremsscheibe beschrieben. Die beschriebene Bremsscheibe umfasst einen Grundkörper aus einem Basiswerkstoff, welcher zumindest an einer seiner Kontaktflächen zum Zusammenwirken mit einem Bremsbelag ganz oder abschnittsweise mit einer metallischen Reibbeschichtung versehen ist, welche verschleißmindernde Hartpartikel, beispielsweise aus Keramik enthält, wobei die Reibbeschichtung als Sprühkompaktierungsbeschichtung ausgebildet ist. In einem Fertigungsschritt wird die Oxidschicht auf der Kontaktfläche des Grundkörpers entfernt und die Kontaktfläche vorgewärmt, um die Haftung der Verschleißschicht zu erhöhen. Anschließend wird die Verschleißschicht auf die Kontaktfläche des Grundkörpers aufgespritzt.

Hierbei wird eine metallische Verbindung mit Hartpartikeln unter hohen Geschwindigkeiten gemischt.

In der Offenlegungsschrift DE 100 56 161 A1 werden eine Bremsscheibe und ein Verfahren zum Herstellen einer Bremsscheibe beschrieben. Die Bremsscheibe umfasst einen Grundkörper mit mindestens einer Kontaktfläche und mindestens einer, an der mindestens einen Kontaktfläche des Grundkörpers aufgebrachten Verschleißschicht. In einem Fertigungsschritt wird die Oxidschicht oder andere Verunreinigungen auf der Kontaktfläche des Grundkörpers entfernt und die Kontaktfläche mittelst Bestrahlung durch Feinpartikel aufgeraut, um die Haftung der Verschleißschicht zu erhöhen. Anschließend wird die Verschleißschicht im Flamm-, Lichtbogen- oder Plasmaspritzgussbeschichtungsverfahren auf die Kontaktfläche des Grundkörpers aufgespritzt.

In den Dokumenten DE 10 2009 003 161 A1, US 5,629,102 A und WO2011/130529 A1 wird jeweils eine Bremsscheibe beschrieben. Die beschriebenen Bremsscheiben umfassen jeweils einen Grundkörper mit mindestens einer Kontaktfläche, auf welche eine Verschleißschicht aufgebracht ist. Zur Realisierung des Verbundes zwischen der Verschleißschicht und dem Grundkörper ist die mindestens eine Kontaktfläche des Grundkörpers vorbehandelt, wobei die vorbehandelte mindestens eine Kontaktfläche des Grundkörpers eine durch Laserstrahlung modifizierte Oberflächentopographie mit mindestens einem vorgegebenen Parameter aufweist.

### Offenbarung der Erfindung

Die erfindungsgemäße Bremsscheibe mit den Merkmalen des unabhängigen Patentanspruchs 1 und das erfindungsgemäße Verfahren zum Herstellen einer Bremsscheibe mit den Merkmalen des unabhängigen Patentanspruchs 6 haben demgegenüber den Vorteil, dass die Bremsscheibe so vorbehandelt ist, das die mindestens eine Kontaktfläche des Grundkörpers eine durch Laserstrahlung modifizierte Oberflächentopographie mit mindestens einem vorgegebenen Parameter aufweist.

Unter den verschiedenen vorgebbaren Parametern der Oberflächentopographie wird nachfolgend beispielsweise eine Struktur, ein Reinigungsgrad, eine chemi-sche Zusammensetzung, eine Rauheit usw. der vorbehandelten Kontaktfläche verstanden. So können beispielsweise einzelne oder eine Kombination der genannten Parameter zur Erzeugung einer gewünschten Oberflächentopographie der Kontaktfläche vorgegeben werden.

Eine durch Laserstrahlung modifizierte Oberflächentopographie der mindestens einen Kontaktfläche führt im Vergleich zum Anwärmen zu einer besseren Haftung zwischen dem Grundkörper und der Verschleißschicht. Des Weiteren ist eine durch Laserstrahlung modifizierte Oberflächentopographie der mindestens einen Kontaktfläche günstiger und weniger aufwändig in der Realisierung, als das Aufbringen einer Haftmittlerschicht. Weiter ist eine durch Laserstrahlung modifizierte Oberflächentopographie der mindestens einen Kontaktfläche im Gegensatz zu einer Modifikation mittels Feinpartikelbestrahlung reproduzierbar. Ein weiterer Vorteil der Laserstrahlung besteht darin, dass keine Feinpartikeleinschlüsse auf der Kontaktfläche einen negativen Einfluss auf die Haftung zwischen Grundkörper und Verschleißschicht ausüben.

Das laserstrahlungsbasierende Verfahren zur Modifikation einer Oberflächentopographie von mindestens einer Kontaktfläche des metallischen und/oder keramischen Grundkörpers der Bremsscheibe führt somit in vorteilhafter Weise zu einer Erhöhung der Haftung zwischen Grundkörper und Verschleißschicht. Zudem können Parameter der Laserstrahlung, wie beispielsweise aufgewendete Energie und/oder Intensität und/oder Abmessung und/oder Bestrahlungsdauer usw., gezielt gesteuert und an die vorhandenen Gegebenheiten sowie an den mindestens einen vorgegebenen Parameter der Oberflächentopographie der Kontaktfläche angepasst werden.

Ausführungsformen der erfindungsgemäßen Bremsscheibe umfassen einen Grundkörper mit mindestens einer Kontaktfläche, auf welche eine Verschleißschicht aufgebracht ist. Zur Realisierung des Verbundes zwischen der Verschleißschicht und dem Grundkörper ist die mindestens eine Kontaktfläche des Grundkörpers vorbehandelt. Hierbei ist mindestens ein vorgegebener Parameter einer Oberflächentopographie der mindestens einen Kontaktfläche des Grundkörpers durch Laserstrahlung modifiziert.

Ausführungsformen des erfindungsgemäßen Verfahrens zur Herstellung einer solchen Bremsscheibe, stellen einen Grundkörper mit mindestens einer Kontaktfläche zur Verfügung, auf welche eine Verschleißschicht aufgebracht wird. Zur Realisierung des Verbundes zwischen der Verschleißschicht und dem Grundkörper wird die mindestens eine Kontaktfläche des Grundkörpers vorbehandelt. Hierbei wird mindestens ein vorgegebener Parameter einer Oberflächentopographie der mindestens einen Kontaktfläche des Grundkörpers durch Laserstrahlung modifiziert.

Durch die in den abhängigen Ansprüchen aufgeführten Maßnahmen und Weiterbildungen sind vorteilhafte Verbesserungen der im unabhängigen Patentanspruch 1 angegebenen Bremsscheibe, sowie des im Patentanspruch 6 angegebenen Verfahrens zur Herstellung einer Bremsscheibe möglich.

Besonders vorteilhaft ist, dass der mindestens eine vorgegebene Parameter der modifizierten Oberflächentopographie der mindestens einen Kontaktfläche eine vorgegebene Struktur und/oder einen vorgegebenen Reinigungsgrad und/oder eine vorgegebene chemische Zusammensetzung und/oder eine vorgegebene Rauheit umfasst. Dies führt in vorteilhafter Weise zu einer Kontaktfläche, an welcher die Verschleißschicht besser haften kann. Die Haftung der Verschleißschicht kann erfindungsgemäß durch einen höheren Reinheitsgrad verbessert werden. Unter einem höheren Reinheitsgrad wird ein geringes Vorkommen von Ablagerung wie zum Beispiel Fett und/oder Kohle verstanden. Eine weitere Verbesserung der Haftung kann erfindungsgemäß durch eine Anpassung der chemischen Zusammensetzung der Kontaktfläche erzielt werden. Des Weiteren kann die Haftung der Verschleißschicht durch eine höhere Rauheit der Kontaktfläche verbessert werden. Durch die verbesserte Haftung der Verschleißschicht auf der Kontaktfläche kann die Zuverlässigkeit der Bremswirkung der Bremsscheibe im Zusammenspiel mit korrespondierenden Bremsbelägen verbessert werden. Die erfindungsgemäße Bremsscheibe weist somit eine Kontaktfläche mit vorteilhaften Parametern der Oberflächentopographie auf, welche eine verbesserte Haftung der Verschleißschicht erzielen und somit die Zuverlässigkeit der Bremsscheibe erhöhen.

In vorteilhafter Ausgestaltung der erfindungsgemäßen Bremsscheibe, kann die mindestens eine Kontaktfläche des Grundkörpers eine durch Laserstrahlung mäanderförmig und/oder rillenförmig und/oder spiralförmig bearbeite Fläche aufwei-sen. Dies ermöglicht in vorteilhafter Weise eine gleichmäßig bearbeitete Kontaktfläche.

Der Grundkörper der erfindungsgemäßen Bremsscheibe kann beispielsweise als ein metallischer und/oder keramischer Körper ausgeführt werden. Dies ermöglicht in vorteilhafter Weise eine große Bandbreite an möglichen Legierungen und Verbindungen, welche äußerst stabil sind, wie beispielsweise Grauguss, Stahlguss, Schmiedestahl, Kugelgraphitguss, Aluminium, usw.

In weiterer vorteilhafter Ausgestaltung der erfindungsgemäßen Bremsscheibe ist die Verschleißschicht auf der mindestens einen modifizierten Kontaktfläche des Grundkörpers aufgespritzt. Der Spritzvorgang ermöglicht in vorteilhafter Weise eine äußert dünne Ausführung der Verschleißschicht. Auf diese Weise können die Materialeigenschaften des Grundkörpers mit den Materialeigenschaften der Verschleißschicht vorteilhaft kombiniert werden. Das bedeutet beispielsweise, dass die gute Wärmeleitfähigkeit des Grundkörpers mit der Verschleißbeständigkeit der Verschleißschicht kombiniert werden kann.

In vorteilhafter Ausgestaltung des erfindungsgemäßen Verfahrens zum Herstellen einer Bremsscheibe kann durch die Laserstrahlung eine Struktur und/oder ein Reinigungsgrad und/oder eine chemische Zusammensetzung und/oder eine Rauheit als mindestens ein Parameter der modifizierten Oberflächentopographie der mindestens einen Kontaktfläche vorgegeben werden. Durch den vorgegebenen Parameter der modifizierten Oberflächentopographie, welcher von den Eigenschaften der verwendeten Laserstrahlung abhängt, werden gute Voraussetzungen für die Haftung der Verschleißschicht auf der Kontaktfläche geschaffen. Somit sind viele unterschiedliche Verbindungsmöglichkeiten zwischen der Verschleißschicht und dem Grundkörper möglich. Dies ermöglicht eine Auswahl aus verschiedenen Materialverbindungen für die Verschleißschicht, welche an die Gegebenheiten anpasst werden kann.

In vorteilhafter Ausgestaltung des erfindungsgemäßen Verfahrens zum Herstellen einer Bremsscheibe kann die mindestens eine Kontaktfläche über entsprechend einstellbare Parameter der Laserstrahlung erhitzt und/oder aufgeschmolzen und/oder verdampft und/oder gereinigt werden. Auf diese Weise können mehrere erforderliche Vorverarbeitungsschritte gleichzeitig bzw. parallel durchge-führt werden. So können durch die hochenergetische Laserstrahlung beispielsweise organische Ablagerungen, wie Fett von der mindestens einen Kontaktfläche entfernt werden. Erfindungsgemäß kann durch Anwesenheit von reaktiven Gasen eine Modifikation der chemischen Zusammensetzung der Oberflächentopographie der Kontaktfläche realisiert werden. Auf diese Weise kann die Kontaktfläche erfindungsgemäß entkohlt werden. Des Weiteren kann durch die Laserstrahlung eine Homogenisierung der Oberflächentopographie der Kontaktfläche realisiert werden, wenn die mindestens eine Kontaktfläche aufgeschmolzen und Seigerungen und/oder Einschlüsse in der Schmelze gelöst werden. Da die Erstarrung durch die Selbstabschreckung sehr schnell erfolgt, können sich die Legierungselemente oder Verunreinigungen in vorteilhafter Weise nicht entmischen. Dies führt zu einer Kontaktfläche, welche weder Seigerungen noch Einschlüsse aufweist. Eine weitere Möglichkeit zur Vorgabe der Oberflächentopographie der mindestens einen Kontaktfläche ist eine geometrische Modifikation, welche zu einer Strukturierung der mindestens einen Kontaktfläche führt. Durch die Bestrahlung verdampft ein Teil der Kontaktfläche und die vorhandene Kombination aus Schmelze und Dampf kann in vorteilhafter Weise zu einer Veränderung der Oberflächenstruktur führen. Durch Anpassung der Laserparameter kann dabei eine Oberfläche mit einer hohen Rauheit erzeugt werden. Dabei gilt im Allgemeinen, dass eine hohe Rauheit zu einer gute Haftung der Verschleißschicht auf der Kontaktfläche führen kann.

Da die Laserbestrahlung eine gleichzeitige Durchführung mehrerer Vorbehandlungsschritte des Grundkörpers der Bremsscheibe ermöglicht, können insbesondere Zeit und Kosten reduziert werden.

Da die aufgewendete Energie und/oder die Intensität und/oder die Abmessungen und/oder die Bestrahlungsdauer der Laserstrahlung gezielt gesteuert werden können, kann die Laserstrahlung an die vorhandenen Gegebenheiten sowie an den vorgegebenen Parameter der Oberflächentopographie angepasst werden. Beispielsweise wärmt die Laserstrahlung mit geringer Energie die Oberfläche lediglich an. Wird mehr Energie aufgewendet, dann kann die Oberfläche von organischen Ablagerungen befreit werden. Eine weitere Energiesteigerung kann zum Schmelzen und schließlich zum Verdampfen der Kontaktfläche des Grundkörpers führen. Auf diese Weise können die Parameter der Oberflächentopographie der Kontaktfläche verändert werden, wobei die verschiedenen Vorbehandlungsschritte getrennt und/oder gleichzeitig durchgeführt werden können.

In weiterer vorteilhafter Ausgestaltung des erfindungsgemäßen Verfahrens zum Herstellen einer Bremsscheibe wird die Laserstrahlung zur flächigen Bearbeitung der mindestens einen Kontaktfläche des Grundkörpers mäanderförmig und/oder rillenförmig und/oder spiralförmig geführt. Dies ermöglicht in vorteilhafter Weise eine reproduzierbare, gleichmäßige und flächige Bearbeitung der Kontaktfläche.

In weiterer vorteilhafter Ausgestaltung des erfindungsgemäßen Verfahrens zum Herstellen einer Bremsscheibe wird der Verschleißschicht auf die modifizierte Oberflächentopographie der Kontaktfläche des Grundkörpers aufgespritzt. Durch die zuvor durchgeführte Modifikation der Oberflächentopographie der mindestens einen Kontaktfläche des Grundkörpers kann die Haftung der Verschleißschicht in vorteilhafter Weise erhöht werden, so dass eine Vielzahl von Verbindungsmöglichkeiten entsteht, welche an die Materialeigenschaften sowie an die Gegebenheiten angepasst werden kann. So kann die Verschleißschicht beispielsweise durch Hochgeschwindigkeitsflammenspritzen (HVOF) und/oder atmosphärisches Plasma-Spritzen (APS) aufgebracht werden. Des Weiteren können durch den Spritzvorgang dünne Verschleißschichten realisiert werden.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines Ausschnitts eines Ausführungsbeispiels einer erfindungsgemäßen Bremsscheibe.
Fig.2 zeigt eine perspektivische Darstellung eines Vorbehandlungsvorgangs eines Grundkörpers der in Fig. 1 dargestellten erfindungsgemäßen Bremsscheibe mit einer Laserstrahlung.
Fig.3 zeigt ein schematisches Flussdiagramm eines Ausführungsbeispiels eines erfindungsgemäßen Herstellungsverfahrens für eine Bremsscheibe.

### Ausführungsformen der Erfindung

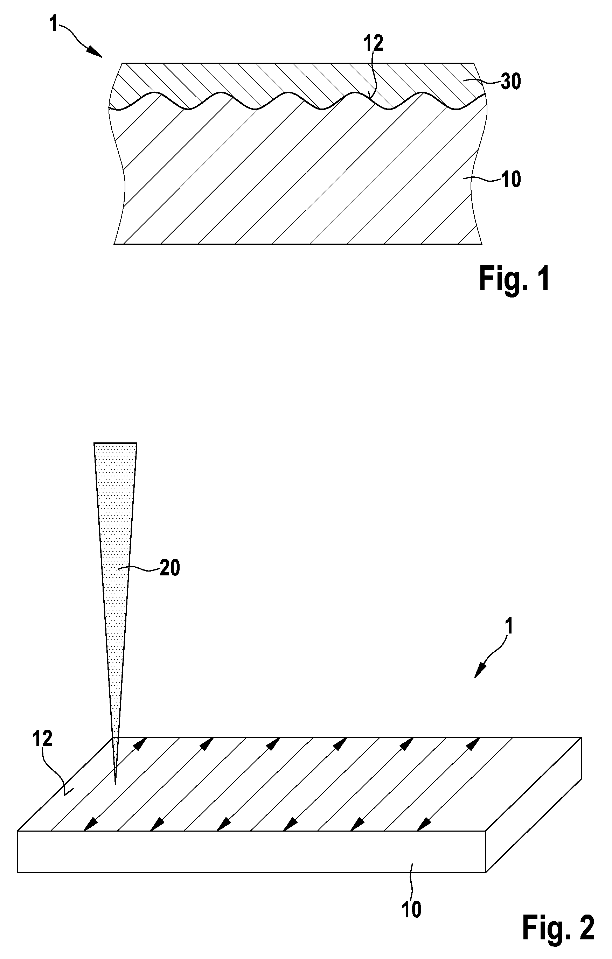

Wie aus Fig. 1 und 2 ersichtlich ist, umfasst das dargestellte Ausführungsbeispiel einer erfindungsgemäßen Bremsscheibe 1 einen Grundkörper 10 mit mindestens einer Kontaktfläche 12 und mindestens einer Verschleißschicht 30. Der Grundkörper 10 ist als ein metallischer und/oder keramischer Körper ausgeführt. Des Weiteren ist der Grundkörper 10 an der mindestens einen Kontaktfläche 12 mit der Verschleißschicht 30 verbunden. Zum Realisieren des Verbundes zwischen der Verschleißschicht 30 und dem Grundkörper 10 ist eine Vorbearbeitung der Oberflächentopographie der mindestens einen Kontaktfläche 12 des Grundkörpers 10 vorgesehen. Erfindungsgemäß weist die vorbehandelte mindestens eine Kontaktfläche 12 des Grundkörpers 10 eine durch Laserstrahlung 20 modifizierte Oberflächentopographie mit mindestens einem vorgegebenen Parameter auf.

Im dargestellten Ausführungsbeispiel wird die Kontaktfläche 12 des Grundkörpers 10 durch die Laserstrahlung 20 erhitzt und/oder aufgeschmolzen und/oder verdampft und/oder gereinigt. Des Weiteren wird die Laserstrahlung 20 rillenförmig über die Kontaktfläche 12 des Grundkörpers 10 geführt. Es sind auch andere Arten der Führung der Laserstrahlung 20, wie beispielsweise eine mäanderförmige und/oder spiralförmige Führung der Laserstrahlung 20 möglich, um eine Modifikation der Oberflächentopographie der Kontaktfläche 12 des Grundkörpers 10 zu erreichen.

Nach dem Abschluss der Modifikation der Oberflächentopographie der Kontaktfläche 12 des Grundkörpers 10 wird die Verschleißschicht 30 auf die modifizierte Oberflächentopographie der Kontaktfläche 12 des Grundkörpers 10 aufgespritzt. Durch die Laserstrahlung 20 können die gewünschten Parameter der Oberflächentopographie der Kontaktfläche 12 des Grundkörpers 10 einfach, schnell und reproduzierbar umgesetzt werden. Des Weiteren ermöglichen Ausführungsformen der erfindungsgemäßen Bremsscheibe 1 im Zusammenspiel mit korrespondierenden Bremsbelägen, welche mit der Verschleißschicht 30 der Kontaktfläche 12 zusammenwirken, einen nahezu verschleißfreien Bremsbetrieb, da die Verschleißschicht 30 durch die Modifikation der Oberflächentopographie der mindestens einen Kontaktfläche 12 zuverlässig an der Kontaktfläche 12 des Grundkörpers 10 der Bremsscheibe 1 haftet.

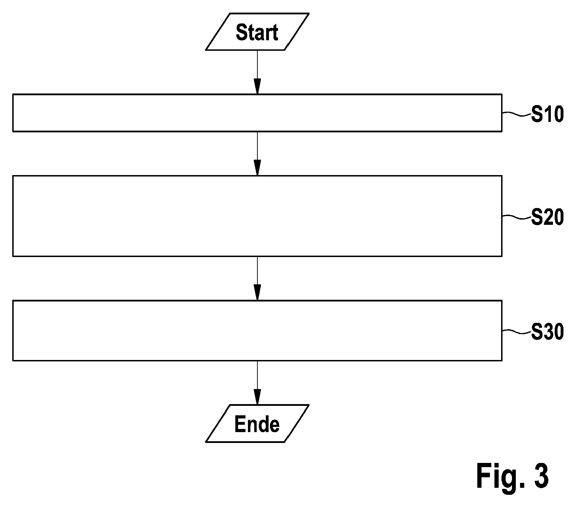

Wie aus Fig. 3 ersichtlich ist, wird in einem Verfahrensschritt S10, der Grundkörper 10 mit mindestens einer Kontaktfläche 12 hergestellt. Der Grundkörper 10 kann beispielsweise aus geeigneten Materialien, wie Grauguss, Stahlguss, Schmiedestahl, Kugelgraphitguss, Aluminium, usw., gegossen, geschmiedet oder anderweitig hergestellt werden.

In einem Verfahrensschritt S20 wird mindestens ein vorgegebener Parameter der Oberflächentopographie der mindestens einen Kontaktfläche 12 des Grundkörpers 10 durch Laserstrahlung 20 modifiziert. In vorteilhafter Weise wird die mindestens eine Kontaktfläche 12 durch die Laserstrahlung 20 erhitzt und/oder aufgeschmolzen und/oder verdampft und/oder gereinigt. Auf diese Weise können mehrere Vorbehandlungsschritte der Kontaktfläche 12 des Grundkörpers 10 glichzeitig durchgeführt werden. Beispielsweise können durch die hochenergetische Laserstrahlung 20 organische Ablagerungen entfernt, die chemische Zusammensetzung der Oberflächentopographie der Kontaktfläche 12 modifiziert und die Kontaktfläche 12 entkohlt werden. Des Weiteren kann durch die Laserstrahlung die mindestens eine Kontaktfläche 12 aufgeschmolzen werden, so dass Seigerungen und/oder Einschlüsse in der Schmelze gelöst werden. Da die Erstarrung durch die Selbstabschreckung sehr schnell erfolgt, können sich die Legierungselemente oder Verunreinigungen in vorteilhafter Weise nicht mehr entmischen und es entsteht eine homogene Kontaktfläche 12. Zudem kann durch die Laserstrahlung 20 ein Teil der Kontaktfläche 12 verdampfen. Die Kombination aus Schmelze und Dampf führt in vorteilhafter Weise zu einer Veränderung der Oberflächenstruktur, so dass durch Anpassung der Laserparameter eine Oberflächentopographie mit einer hohen Rauheit erzeugt werden kann.

In einem Verfahrensschritt S30 wird die Verschleißschicht 30 auf den Grundkörper 10 aufgebracht. Vorzugsweise wird die Verschleißschicht 30 auf die modifizierte Oberflächentopographie der Kontaktfläche 12 des Grundkörpers 10 aufgespritzt. Durch die im Schritt S20 durchgeführte Modifikation der Oberflächentopographie der Kontaktfläche 12 des Grundkörpers 10 kann die Haftung der Verschleißschicht 30 in vorteilhafter Weise erhöht werden, so dass eine Vielzahl von Verbindungsmöglichkeiten entsteht, welche an die Materialeigenschaften sowie an die Gegebenheiten angepasst werden kann. So kann die Verschleißschicht beispielsweise durch Hochgeschwindigkeitsflammenspritzen (HVOF) und/oder atmosphärisches Plasma-Spritzen (APS) aufgebracht werden.

## Patentansprüche

1. Bremsscheibe, welche einen Grundkörper (10) mit mindestens einer Kontaktfläche (12) aufweist, auf welche eine Verschleißschicht (30) aufgebracht ist, wobei zur Realisierung des Verbundes zwischen der Verschleißschicht (30) und dem Grundkörper (10) die mindestens eine Kontaktfläche (12) des Grundkörpers (10) vorbehandelt ist, wobei die vorbehandelte mindestens eine Kontaktfläche (12) des Grundkörpers (10) eine durch Laserstrahlung (20) modifizierte Oberflächentopographie mit mindestens einem vorgegebenen Parameter aufweist, **dadurch gekennzeichnet, dass** die Laserstrahlung (20) in Verbindung mit reaktiven Gasen die chemische Zusammensetzung der Oberflächentopographie der Kontaktfläche modifiziert und einen höheren Reinheitsgrad mit einem reduzierten Vorkommen von Kohleablagerungen erzeugt.

2. Bremsscheibe nach Anspruch 1, **dadurch gekennzeichnet, dass** der mindestens eine vorgegebenen Parameter der modifizierten Oberflächentopographie der mindestens einen Kontaktfläche (12) eine vorgegebene Struktur und/oder einen vorgegebenen Reinigungsgrad und/oder eine vorgegebene Rauheit umfasst.

3. Bremsscheibe nach Anspruch 2, **dadurch gekennzeichnet, dass** die vorgegebene Struktur der mindestens einen Kontaktfläche (12) mäanderförmig und/oder rillenförmig und/oder spiralförmig ausgeführt ist.

4. Bremsscheibe nach einem der Ansprüche 1 bis 3, **dadurch gekennzeichnet, dass** der Grundkörper (10) als ein metallischer und/oder keramischer Körper ausgeführt ist.

5. Bremsscheibe nach einem der Ansprüche 1 bis 4, **dadurch gekennzeichnet, dass** die Verschleißschicht (30) auf die mindestens eine modifizierte Kontaktfläche (12) des Grundkörpers (10) aufgespritzt ist.

6. Verfahren zur Herstellung einer Bremsscheibe, welche nach einem der vorhergehenden Ansprüche 1 bis 5 ausgeführt ist, wobei die Bremsscheibe (1) einen Grundkörper (10) mit mindestens einer Kontaktfläche (12) aufweist, auf welchen eine Verschleißschicht (30) aufgebracht wird, wobei zur Realisierung des Verbundes zwischen der Verschleißschicht (30) und dem Grundkörper (10) die mindestens eine Kontaktfläche (12) des Grundkörpers (10) vorbehandelt wird, wobei mindestens ein vorgegebener Parameter einer Oberflächentopographie der mindestens einen Kontaktfläche (12) des Grundkörpers (10) durch Laserstrahlung (20) modifiziert wird, **dadurch gekennzeichnet, dass** durch die Laserstrahlung (20) in Verbindung mit reaktiven Gasen die chemische Zusammensetzung der Oberflächentopographie der Kontaktfläche modifiziert und ein höherer Reinheitsgrad der Oberflächentopographie des Grundkörpers (10) mit einem reduzierten Vorkommen von Kohleablagerungen erzeugt wird.

7. Verfahren nach Anspruch 6, **dadurch gekennzeichnet, dass** durch die Laserstrahlung (20) eine Struktur und/oder ein Reinigungsgrad und/oder eine Rauheit als mindestens ein Parameter der modifizierten Oberflächentopographie der mindestens einen Kontaktfläche (12) vorgegeben werden.

8. Verfahren zur Herstellung einer Bremsscheibe nach Anspruch 6 oder 7,
**dadurch gekennzeichnet, dass** die mindestens eine Kontaktfläche (12) des Grundkörpers (10) über einstellbare Parameter der Laserstrahlung (20) erhitzt und/oder aufgeschmolzen und/oder verdampft und/oder gereinigt wird.

9. Verfahren zur Herstellung einer Bremsscheibe nach einem der Ansprüche 6 bis 8, **dadurch gekennzeichnet, dass** die Laserstrahlung (20) zur flächigen Bearbeitung der mindestens einen Kontaktfläche (12) des Grundkörpers (10) mäanderförmig und/oder rillenförmig und/oder spiralförmig geführt wird.

10. Verfahren zur Herstellung einer Bremsscheibe nach einem der Ansprüche 6 bis 9, **dadurch gekennzeichnet, dass** die Verschleißschicht (30) auf die mindestens eine modifizierte Kontaktfläche (12) des Grundkörpers (10) aufgespritzt wird.

## Claims

1. Brake disk, which has a basic body (10) with at least one contact surface (12), to which a wearing coat (30) has been applied, wherein, to realize the bond between the wearing coat (30) and the basic body (10), the at least one contact surface (12) of the basic body (10) is pretreated, wherein the pretreated at least one contact surface (12) of the basic body (10) has a surface topography modified by laser radiation (20), with at least one predetermined parameter **characterized in that** the laser radiation (20) in combination with reactive gases modifies the chemical composition of the surface topography of the contact surface and produces a higher degree of cleanness, with a reduced occurrence of carbon deposits.

2. Brake disk according to Claim 1, **characterized in that** the at least one predetermined parameter of the modified surface topography of the at least one contact surface (12) comprises a predetermined structure and/or a predetermined degree of cleanness and/or a predetermined roughness.

3. Brake disk according to Claim 2, **characterized in that** the predetermined structure of the at least one contact surface (12) is made in a meandering and/or grooved and/or spiraled form.

4. Brake disk according to one of Claims 1 to 3, **characterized in that** the basic body (10) is made as a metallic and/or ceramic body.

5. Brake disk according to one of Claims 1 to 4, **characterized in that** the wearing coat (30) is sprayed on the at least one modified contact surface (12) of the basic body (10).

6. Method for producing a brake disk that is made according to one of the preceding Claims 1 to 5, wherein the brake disk (1) has a basic body (10) with at least one contact surface (12), to which a wearing coat (30) has been applied, wherein, to realize the bond between the wearing coat (30) and the basic body (10), the at least one contact surface (12) of the basic body (10) is pretreated, wherein at least one predetermined parameter of a surface topography of the at least one contact surface (12) of the basic body (10) is modified by laser radiation (20) **characterized in that** by the laser radiation (20) in combination with reactive gases the chemical composition of the surface topography of the contact surface is modified and a higher degree of cleanness of the surface topography of the basic body (10) is produced, with a reduced occurrence of carbon deposits.

7. Method according to Claim 6, **characterized in that** a structure and/or a degree of cleanness and/or a roughness is/are predetermined by the laser radiation (20) as at least one parameter of the modified surface topography of the at least one contact surface (12).

8. Method for producing a brake disk according to Claim 6 or 7, **characterized in that** the at least one contact surface (12) of the basic body (10) is heated and/or melted and/or vaporized and/or cleaned by way of settable parameters of the laser radiation (20).

9. Method for producing a brake disk according to one of Claims 6 to 8, **characterized in that** the laser radiation (20) for the surface working of the at least one contact surface (12) of the basic body (10) is conducted in a meandering and/or grooved and/or spiraled form.

10. Method for producing a brake disk according to one of Claims 6 to 9, **characterized in that** the wearing coat (30) is sprayed onto the at least one modified contact surface (12) of the basic body (10).

## Revendications

1. Disque de frein, lequel possède un corps de base (10) comprenant au moins une surface de contact (12) sur laquelle est appliquée une couche d'usure (30), l'au moins une surface de contact (12) du corps de base (10) étant prétraitée en vue de réaliser la liaison entre la couche d'usure (30) et le corps de base (10), l'au moins une surface de contact (12) prétraitée du corps de base (10) possédant une topographie de surface modifiée par rayonnement laser (20) ayant au moins un paramètre prédéfini, **caractérisé en ce que** le rayonnement laser (20), en association avec des gaz réactifs, modifie la composition chimique de la topographie de surface de la surface de contact et produit un degré de pureté plus élevé avec une occurrence réduite de dépôts de calamine.

2. Disque de frein selon la revendication 1, **caractérisé en ce que** l'au moins un paramètre prédéfini de la topographie de surface modifiée de l'au moins une surface de contact (12) comprend une structure prédéfinie et/ou un degré de pureté prédéfini et/ou une rugosité prédéfinie.

3. Disque de frein selon la revendication 2, **caractérisé en ce que** la structure prédéfinie de l'au moins une surface de contact (12) est exécutée en forme de méandre et/ou en forme de rainure et/ou en forme de spirale.

4. Disque de frein selon l'une des revendications 1 à 3, **caractérisé en ce que** le corps de base (10) est exécuté sous la forme d'un corps métallique et/ou céramique.

5. Disque de frein selon l'une des revendications 1 à 4, **caractérisé en ce que** la couche d'usure (30) est appliquée par pulvérisation sur l'au moins une surface de contact (12) modifiée du corps de base (10).

6. Procédé de fabrication d'un disque de frein qui est exécuté selon l'une des revendications précédentes 1 à 5, selon lequel le disque de frein (1) possède un corps de base (10) comprenant au moins une surface de contact (12) sur laquelle est appliquée une couche d'usure (30), l'au moins une surface de contact (12) du corps de base (10) étant prétraitée en vue de réaliser la liaison entre la couche d'usure (30) et le corps de base (10), au moins un paramètre prédéfini d'une topographie de surface de l'au moins une surface de contact (12) du corps de base (10) étant modifié par rayonnement laser (20), **caractérisé en ce que** la composition chimique de la topographie de surface de la surface de contact est modifiée par le rayonnement laser (20) en association avec des gaz réactifs, et un degré de pureté plus élevé de la topographie de surface du corps de base (10) est produit, avec une occurrence réduite de dépôts de calamine.

7. Procédé selon la revendication 6, **caractérisé en ce qu'**une structure et/ou un degré de pureté et/ou une rugosité sont prédéfinis par le rayonnement laser (20) en tant qu'au moins un paramètre de la topographie de surface modifiée de l'au moins une surface, de contact (12).

8. Procédé de fabrication d'un disque de frein selon la revendication 6 ou 7, **caractérisé en ce que** l'au moins une surface de contact (12) du corps de base (10) est chauffée et/ou mise en fusion et/ou évaporée et/ou purifiée par le biais de paramètres réglables du rayonnement laser (20).

9. Procédé de fabrication d'un disque de frein selon l'une des revendications 6 à 8, **caractérisé en ce que** le rayonnement laser (20) est guidé en vue de l'usinage de surface de l'au moins une surface de contact (12) du corps de base (10) en forme de méandre et/ou en forme de rainure et/ou en forme de spirale.

10. Procédé de fabrication d'un disque de frein selon l'une des revendications 6 à 9, **caractérisé en ce que** la couche d'usure (30) est appliquée par pulvérisation sur l'au moins une surface de contact (12) modifiée du corps de base (10).
